# EUROPÄISCHE PATENTSCHRIFT

(11) **EP 1 097 054 B1**
(45) Veröffentlichungstag und Bekanntmachung des Hinweises auf die Patenterteilung: **07.01.2004**
(21) Anmeldenummer: 99936553.9
(22) Anmeldetag: 16.07.1999
(51) Int. Cl.: B60K 31/00

(54) **VERFAHREN UND VORRICHTUNG ZUM ERMITTELN EINER KENNGRÖSSE FÜR EINEN MOMENTAN MAXIMALEN REIBKRAFTBEIWERT**
METHOD AND DEVICE FOR DETERMINING A PARAMETER FOR AN INSTANTANEOUSLY MAXIMAL FRICTIONAL FORCE COEFFICIENT
PROCEDE ET DISPOSITIF SERVANT A DETERMINER UN PARAMETRE INDIQUANT UNE VALEUR DE FRICTION MAXIMUM MOMENTANEE

(30) Priorität: 17.07.1998 DE 19832265; 01.02.1999 DE 19903932
(43) Veröffentlichungstag der Anmeldung: 09.05.2001
(73) Patentinhaber: Continental Teves AG & Co. oHG, 60488 Frankfurt (DE)
(72) Erfinder: RIETH, Peter, D-65343 Eltville (DE)
(86) Internationale Anmeldenummer: PCT/EP1999/005078
(87) Internationale Veröffentlichungsnummer: WO 2000/003889

(56) Entgegenhaltungen:
- EP-A- 0 363 570
- EP-A- 0 412 791
- EP-A- 0 444 772
- EP-A- 0 568 204
- DE-A- 3 534 022
- DE-A- 3 735 673
- DE-A- 4 435 448
- US-A- 3 893 330

## Beschreibung

Die Erfindung betrifft Verfahren und eine Vorrichtung zum Ermitteln einer Kenngröße für einen momentan maximalen Reibkraftbeiwert zwischen Reifen eines Fahrzeugs und einer Fahrbahn, der durch das Verhältnis aus Reibkraft zur Radaufstandskraft berechnet wird.

Es ist bekannt, den Sicherheitsabstand zwischen zwei hintereinander fahrenden Fahrzeugen im Rahmen einer Fahrtregelung (ICC-Intelligent Cruise Control) fest einzustellen, nämlich in der Regel auf einen Abstand in Metern, der der halben Tachoanzeige in Kilometern pro Stunde entspricht, so daß bei beispielsweise 100 km/h der Sicherheitsabstand 50m beträgt. Ein Sicherheitsabstand von 50m ist gleichbedeutend mit einer konstanten, geschwindigkeitsunabhängigen Folgezeit tₛ = 1,8 Sek, die im Folgenden als Standardfolgezeit bezeichnet wird.

Eine Unterschreitung der Standardfolgezeit von mehr als 50%, also tₛ ≤ 0,9 Sek., wird zur Zeit mit Bußgeld geahndet. Eine Überschreitung der Standardfolgezeit in einem erheblichen Ausmaß, so daß tₛ ≥ 3 Sek. , ruft eine sogenannte Einscherproblematik hervor. Aus. diesem Grund ist es bereits vorgeschlagen worden, die Folgezeit manuell durch einen Fahrer des Fahrzeuges einstellbar auszugestalten, so daß 0,9 Sek. ≤ tₛ ≤ 3Sek. Dieser Vorschlag ist jedoch eher kritisch zu betrachten, da bei Fahrer- und/oder Wetterwechsel ein falsch eingestellter Wert in kritischen Situationen zu zu kurzen Bremsabständen mit der Gefahr des Auffahrens auf das Vorderfahrzeug führen kann.

Ferner ist es bekannt, daß der momentan maximale Reibkraftbeiwert, der näherungsweise durch den Längskraftbeiwert zwischen den Reifen eines Fahrzeugs und einer Fahrbahn gegeben ist, zur Berechnung eines Sicherheitsabstands beziehungsweise einer Folgezeit geeignet ist.

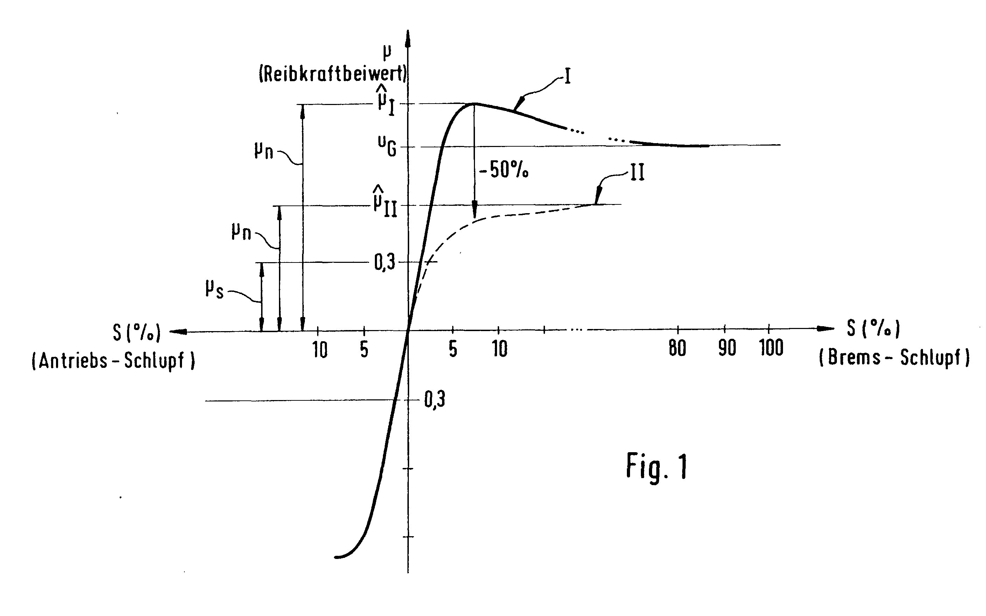

Figur 1 zeigt einen charakteristischen Reibkraftbeiwert-Schlupf-Verlauf (µ-S-Verlauf) für einen üblichen Reifen auf einer üblichen Fahrbahn bei Geradeausfahrt mit 80 km/h und 20°C Außentemperatur, einerseits bei einer Wasserhöhe von 0,3 mm auf der Fahrbahn, siehe Kurve I, sowie andererseits bei einer Wasserhöhe von 3 mm auf der Fahrbahn, siehe Kurve II, wobei der Schlupf, also das Verhältnis aus der Differenz zwischen einer synchronen Geschwindigkeit (Radtranslationslationsgeschwindigkeit) und einer asynchronen Geschwindigkeit(Radumfangsgeschwindigkeit) zu der synchronen Geschwindigkeit, sowohl für die Antriebs- als auch die Bremsseite in Prozenten angegeben ist. Wie einem Vergleich der Kurven I und II zu entnehmen ist, kommt es im Falle eines starken Regenfalls zu einem 50%igen Reibkraftbeiwertabfall, was aus Sicherheitsgründen mit einer Verdoppelung der Folgezeit einhergehen sollte. Ferner ist Figur 1 zu entnehmen, daß abhängig von den Wetterverhältnissen ein maximaler Reibkraftbeiwert, wie µ_{I} beziehungsweise µ_{II}, existiert und in Notsituationen abverlangt werden muß, und sich bei einem 100%igen Schlupf der Reibkraftbeiwert einem Standardwert µ_{G} im Falle geringer Nässe nähert, der einen maßgeblichen Parameter beim Straßenentwurf bildet und sich aus einer Bemessung bei einem in Längsrichtung rollenden Einzelfahrzeug mit PIARC Reifen auf nasser, aber sauberer Fahrbahn ergibt. Schließlich ist noch darauf hinzuweisen, daß aus Sicherheitsgründen in üblichen Fahrtregelungssystemen ein Reibkraftbeiwert µ=0,3 gefordert wird.

Bislang werden zur Ermittlung des momentan maximalen Reibkraftbeiwerts zwei unterschiedliche Ansätze verfolgt. So wird zum einen eine optische Abtastung einer Fahrbahnoberfläche unter einem Fahrzeug oder vor einem Fahrzeug zur anschließenden Auswertung des entsprechenden Brechungs- und Reflexionsverhaltens durchgeführt. Zum anderen ist vorgeschlagen worden, im Profilstollen eines Reifens Sensoren zur Messung der Schubkraft beziehungsweise Schubverformung zu installieren. Diese Arten der Erfassung des momentan maximalen Reibkraftbeiwerts sind in der Herstellung als auch Installation kostenaufwendig.

In der EP 0 412 791 A2 (Oberbegriff der Ansprüche 1, 3 und 12) ist ein Verfahren zum Beobachten und zur Bestimmung von Bedingungen zwischen Fahrzeug und der Fahrbahnoberfläche beschrieben, bei dem Signale mehrerer Sensoren für die Fahrbahnoberfläche, das Fahrzeug sowie äußere Bedingungen analysiert und miteinander verglichen werden daraus ein Wert für den Reibkraftbeiwert ermittelt wird.

In der DE 37 35 673 A1 ist ein Verfahren zur fortlaufenden Bestimmung des Kraftschlußbeiwerts µ oder der Steigungen Kµ der µ-Schlupfkurve während der Fahrt beschrieben, bei dem die Radgeschwindigkeiten und das Motormoment gemessen werden und mit Hilfe von Identifikationsalgorithmen aus Bestimmungsgleichungen Parameter geschätzt werden, die in Verbindung mit Konstanten und den Radgeschwindigkeiten eine Ermittlung des Schätzwerts für den Kraftschlußbeiwert µ oder der Steigungen Kµ der µ-Schlupfkurve ermöglichen sollen.

Aufgabe der vorliegenden Erfindung ist es, eine Kenngröße für den momentan maximalen Reibkraftbeiwert auf einfache und kostengünstige Weise zu liefern.

Diese Aufgabe wird durch ein Verfahren zum Ermitteln einer Kenngröße für einen momentan maximalen Reibkraftbeiwert zwischen Reifen eines Fahrzeugs und einer Fahrbahn, der durch das Verhältnis aus Reibkraft zur Radaufstandskraft berechnet wird, zur Bestimmung einer -mit einem Sicherheitsabstand gleichbedeutenden- Folgezeit des Fahrzeugs relativ zu einem weiteren, jeweils in Fahrtrichtung unmittelbar vorderen Fahrzeug zwecks Abstandsregelung, gelöst, bei dem unter logischer Verknüpfung von Datenausgabewerten von in dem Fahrzeug vorhandener Sensorik, wie Außentemperatursensor, Luftfeuchtesensor, Regensensor, Straßenoberflächetemperatursensor oder Abtastsensor zum Einlesen eines Reifentyps, die Kenngröße des Reibkraftbeiwerts einer von zumindest zwei Klassen zugeordnet und dann der Abstandsregelung des Fahrzeugs zugeführt wird und bei dem die Kenngröße des Reibkraftbeiwerts im Falle von Nässe einer ersten Klasse und ansonsten einer zweiten Klasse, zugeordnet wird, wobei die Folgezeit im Fall von Nässe in einem Bereich von 1,5 Sekunden bis 3,5 Sekunden und im Fall von nicht Nässe in einem Bereich von 0,9 Sekunden bis 1,8 Sekunden variiert und stetig mit einer Zunahme der Fahrtgeschwindigkeit in einem Bereich von 30 bis 150 km/h steigt.

Dabei kann vorgesehen sein, daß die geschwindigkeitsabhängige Kenngröße des Reibkraftbeiwerts jeder der beiden Klassen über die Häufigkeitsverteilung der Reibkraftbeiwerte über eine große Menge an Fahrbahnen, wie über die Gesamtheit aller deutschen Straßen, bei einem hundertprozentigen Schlupf gemessen, insbesondere für ein in Längsrichtung rollendes Einzelfahrzeug mit Standardreifen auf nasser, aber sauberer Fahrbahn, vorzugsweise über die 95%ige Summenhäufigkeitslinie besagter Häufigkeitsverteilung, bestimmt wird.

Diese Aufgabe wird ebenso durch ein Verfahren zum Ermitteln einer Kenngröße für einen momentan maximalen Reibkraftbeiwert zwischen Reifen eines Fahrzeugs und einer Fahrbahn, der durch das Verhältnis aus Reibkraft zur Radaufstandskraft berechnet wird, zur Bestimmung einer -mit einem Sicherheitsabstand gleichbedeutenden- Folgezeit des Fahrzeugs relativ zu einem weiteren, jeweils in Fahrtrichtung unmittelbar vorderen Fahrzeug zwecks Abstandsregelung, gelöst, bei dem unter logischer Verknüpfung von Datenausgabewerten von in dem Fahrzeug vorhandenem Außentemperatursensor, Luftfeuchtesensor, Regensensor, Straßenoberflächetemperatursensor und/oder Abtastsensor zum Einlesen eines Reifentyps, die Kenngröße des Reibkraftbeiwerts über eine unscharfe Logik in Abhängigkeit von Parametern des Reifens des Fahrzeugs, der Fahrbahn und/oder des Kontaktmediums zwischen dem Reifen und der Fahrbahn einer von drei Klassen und somit einem von drei, geschwindigkeitsunabhängigen Kennwerten zugeordnet wird, bei dem durch einen ersten Kennwert niedrige Reibkräfte beziehungsweise Reibkraftbeiwerte, einen zweiten Kennwert mittlere Reibkräfte beziehungsweise Reibkraftbeiwerte und einen dritten Kennwert hohe Reibkräfte beziehungsweise Reibkraftbeiwerte repräsentiert werden und bei dem bei dem ersten Kennwert eine erste Folgezeit, wie 2,5 Sekunden, dem zweiten Kennwert eine zweite Folgezeit, wie 1,8 Sekunden, und dem dritten Kennwert eine dritte Folgezeit, wie 1,3 Sekunden, geschwindigkeitsunabhängig zugeordnet wird und wobei zur Klassenzuordnung zumindest eine Abschätzung der Parameter des Kontaktmediums durchgeführt und die Radaufstandskraft näherungsweise berechnet wird und als Parameter der Reifen des Fahrzeugs Reifentyp, Profilform, Latsch, Gummimischung und/oder Verschleißzustand bei der Klassenzuordnung für den momentan maximalen Reibkraftbeiwert berücksichtigt wird beziehungsweise werden.

Ferner wird erfindungsgemäß vorgeschlagen, daß die Außentemperatur, die relative Luftfeuchte und/oder die Scheibenwischereinstellung, wie Ein/Aus und/oder Frequenz, erfaßt und als die Parameter des Kontaktmediums logisch, insbesondere unter Annahme einer durchschnittlichen Fahrbahn sowie durchschnittlicher Reifen, zur Bestimmung des Kennwerts der Reibkraft verwendet wird beziehungsweise werden.

Nach der Erfindung kann auch vorgesehen sein, daß der Datenausgabewert eines Regensensors als Parameter des Kontaktmediums bei der Bestimmung des Kennwerts der Reibkraft berücksichtigt wird.

Es kann vorgesehen sein, daß der Reifentyp, vorzugsweise über eine Kodierung, vom Fahrer eingegeben oder automatisch eingelesen wird.

Eine Ausführungsform der Erfindung ist dadurch gekennzeichnet, daß der Verschleißzustand jedes Reifen des Fahrzeugs über ein Verschleißmodell, vorzugsweise unter Berücksichtigung eines Geschwindigkeitshistogramms, wie über die Raddrehzahl bestimmt, in Verbindung mit einem Querbeschleunigungshistogramm, wie über Querbeschleunigungssensoren erfaßt, und in Verbindung mit einem Reibkraftbeiwerthistogramm, ermittelt wird.

Der Verschleißzustand kann erfindungsgemäß auch unter Berücksichtigung eines Histogramms der Raddrücke bestimmt werden.

Erfindungsgemäß wird auch vorgeschlagen, daß als Parameter der Fahrbahn Baustoff, Oberflächenstruktur und/oder Oberflächentemperatur derselben bei der Klassenzuordnung für den momentan maximalen Reibkraftbeiwert berücksichtigt wird beziehungsweise werden.

Ferner kann gemäß der Erfindung vorgesehen sein, daß als Parameter des Kontaktmediums Höhe eines Wasserfilms, Eis und/oder festen Schnees auf einer Fahrbahn berücksichtigt wird beziehungsweise werden.

Weiterhin wird erfindungsgemäß vorgeschlagen, daß die Parameter der Fahrbahn und/oder des Kontaktmediums über ein Transpondersystem am Fahrbahnrand in eine Auswerteinrichtung eingekoppelt werden.

Zur Lösung der erfindungsgemäßen Aufgabe wird ferner eine Vorrichtung zum Ermitteln einer Kenngröße für einen momentan maximalen Reibkraftbeiwert zwischen Reifen eines Fahrzeugs und einer Fahrbahn, der durch das Verhältnis aus Reibkraft zur Radaufstandskraft berechnet wird, insbesondere zur Bestimmung einer -mit einem Sicherheitsabstand gleichbedeutenden- Folgezeit des Fahrzeugs relativ zu einem weiteren, jeweils in Fahrtrichtung unmittelbar vorderen Fahrzeug zwecks Abstandsregelung, gemäß einem Verfahren nach einem der vorangehenden Ansprüche, vorgeschlagen, die gekennzeichnet ist durch eine Auswerteinrichtung, die mit einem Außentemperatursensor, der vorzugsweise mit einer Motorsteuerung des Fahrzeugs verbunden ist, mit einem Luftfeuchtesensor, der vorzugsweise mit einer Klimaanlage des Fahrzeugs verbunden ist, und/oder einer Scheibenwischanlage, insbesondere deren Betätigungstaste, Stufenschalter und/oder Regensensor, in ihrem Eingangsbereich und mit einem Anzeigegerät, wie einem Display eines Navigationssystems des Fahrzeugs, und/oder einer Abstandsregelung des Fahrzeugs in ihrem Ausgangsbereich verbunden ist.

Dabei kann vorgesehen sein, daß die Auswerteinrichtung mit einem Straßenoberflächentemperatursensor, wie einer IR-Wärmekamera, verbunden ist.

Ferner wird erfindungsgemäß vorgeschlagen, daß die Auswerteinrichtung über telemetrische Dateneinkopplung von Transpondern am Fahrbahnrand Parameter einer Fahrbahn und/oder eines Kontaktmediums zwischen der Fahrbahn und den Reifen des Fahrzeugs empfängt.

Eine Ausführungsform der Erfindung ist dadurch gekennzeichnet, daß in der Auswerteinrichtung Geschwindigkeitsdaten zur Bestimmung eines Geschwindigkeitshistogramms, Querbeschleunigungsdaten zur Bestimmung eines Querbeschleunigungshistogramms und/oder Reibkraftbeiwerte zur Bestimmung eines Reibkraftbeiwerthistogramms ablegbar sind.

Weiterhin wird erfindungsgemäß vorgeschlagen, daß die Auswerteinrichtung mit einer elektrisch-hydraulischen Bremsanlage zum Erhalt von Raddrücken verbunden ist, und in der Auswerteinrichtung die Raddrücken zur Bestimmung eines Raddruckhistogramms ablegbar sind.

Mit der Erfindung wird ebenfalls vorgeschlagen, daß die Auswerteinrichtung mit einem Bedienfeld zum Eingeben von Parametern per Hand verbunden ist.

Schließlich wird erfindungsgemäß noch vorgeschlagen, daß die Auswerteinrichtung mit einer Einrichtung zum Einlesen eines Reifentyps, wie einem Abtastsensor, vorzugsweise umfassend ein Federbein, zur Erfassung eines Kodierimpulses, vorzugsweise mittels magnetischer Kodierung, verbunden ist.

Der Erfindung liegt somit die überraschende Erkenntnis zugrunde, daß bereits im Fahrzeug vorhandene Sensorinformationen derart miteinander logisch verknüpft werden, daß eine Abschätzung für den momentan maximalen Reibkraftbeiwert erhalten wird, aus der dann beispielsweise eine Folgezeit berechnet und an einen Fahrer weitergegeben beziehungsweise einer Abstandsregelung eines Fahrtregelungssystems zur effektiven Steigerung der Fahrtsicherheit zugeführt wird. Ein besonders durch ihre Einfachheit überzeugendes Merkmal gemäß der Erfindung basiert auf dem Grundsatz "Straße naß, Fuß vom Gas", daß heißt, es findet eine Zuordnung in eine von zwei geschwindigkeitsabhängige Reibkraftbeiwertklassen statt, wobei hier zwischen Nässe und Nicht-Nässe einzig unterschieden wird und sich auf die Häufigkeitsverteilung von µ_{G} über die Gesamtheit aller deutschen Straßen, insbesondere die 95%ige Summenhäufigkeit, bezogen wird.

Die andere Ausführungsform gemäß der Erfindung basiert auf einer unscharfen Logik, der sogenannten Fuzzy Logic, gemäß der dem momentan maximalen Reibkraftbeiwert eine Kenngröße zugeordnet wird, und zwar derart, daß eine Einteilung in eine von drei Klassen stattfindet, der jeweils ein Kennwert zugeordnet ist. Der jeweilige Kennwert für den momentan maximalen Reibkraftbeiwert kann dann einem Fahrer für eine Einstellungsempfehlung über ein Display dargeboten oder einem Fahrtregelungssystem zur automatischen Folgeabstandsanpassung zugeführt werden.

Zur erfindungsgemäßen Bestimmung des Kennwertes für den momentan maximalen Reibkraftbeiwert wird vorzugsweise vorgeschlagen, den Einfluß des Kontaktmediums zwischen Fahrzeug und Fahrbahn zumindest grob abzuschätzen.

Weitere Merkmale und Vorteile der Erfindung ergeben sich aus der nachfolgenden Beschreibung, in der Ausführungsbeispiele der Erfindung anhand von schematischen Zeichnungen im einzelnen erläutert sind. Dabei zeigt:
- Figur 1: charakteristische Verläufe für den momentan maximalen Reibkraftbeiwert gegen den Schlupf für einen üblichen Reifen auf einer üblichen Straße bei einer Geradeausfahrt von 80km/h und 20°C Außentemperatur, bei einer Wasserhöhe von 0,3 mm und 3,0 mm;
- Figuren 2a, 2b: jeweils den Verlauf der Folgezeit in Abhängigkeit von der Fahrtgeschwindigkeit, bei Nässe gemäß Figur 2a und bei Nicht-Nässe gemäß Figur 2b, nach einem erfindungsgemäßen Ausführungsbeispiel;
- Figur 3: ein Zustandsverknüpfungsdiagramm zur Veranschaulichung einer möglichen Zuordnung von Meßwerten zu einem momentan maximalen Reibkraftbeiwert beziehungsweise einer Folgezeit basierend auf einer unscharfen Logik gemäß einem weiteren Ausführungsbeispiel der Erfindung;
- Figur 4: eine Teilschnittansicht zur Demonstration der Erfassung eines Reifentyps; und
- Figur 5: ein Blockschaltbild einer erfindungsgemäß Auswerteinrichtung.

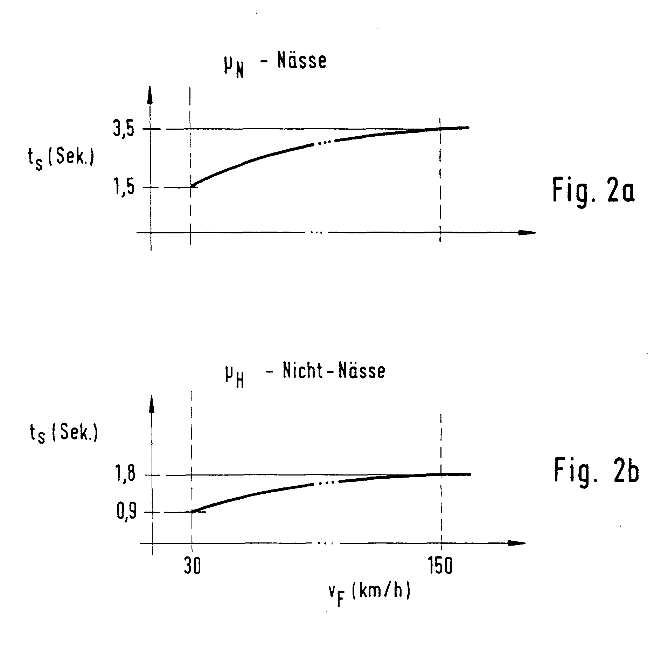

Gemäß einem ersten Ausführungsbeispiel der Erfindung wird lediglich zwischen zwei Reibkraftbeiwertklassen unterschieden, nämlich µ_{N} im Falle von Nässe und µ_{H} im Falle von Nicht-Nässe, wie, beispielsweise, über einen Regensensor einer Scheibenwischersteuerung gemessen. Ferner wird auf die 95%ige Summenhäufigkeitslinie der Häufigkeitsverteilung der Reibkraftbeiwerte µ_{G} bei 100%igem Schlupf im normalen Bemessungsfall, also bei einem in Längsrichtung rollenden Einzelfahrzeug mit PIARC-Reifen, über die Gesamtheit der deutschen Straßen zurückgegriffen, um die in den Figuren 2a und 2b dargestellten Folgezeiten tₛ zu erhalten. Demgemäß variiert die Folgezeit im Falle von Nässe von 1,5 Sekunden bis 3,5 Sekunden und im Falle von Nicht-Nässe von 0,9 Sekunden bis 1,8 Sekunden, liegt also im wesentlichen innerhalb eines Bereichs, der durch den minimal gesetzlich erlaubten Grenzwert tₛ = 0,9 Sek und dem oberen durch eine Einscherproblematik begrenzten Wert tₛ ≈ 3 Sekunden bestimmt ist, und steigt stetig mit Zunahme der Fahrtgeschwindigkeit in dem Bereich von 30 bis 150 km/h.

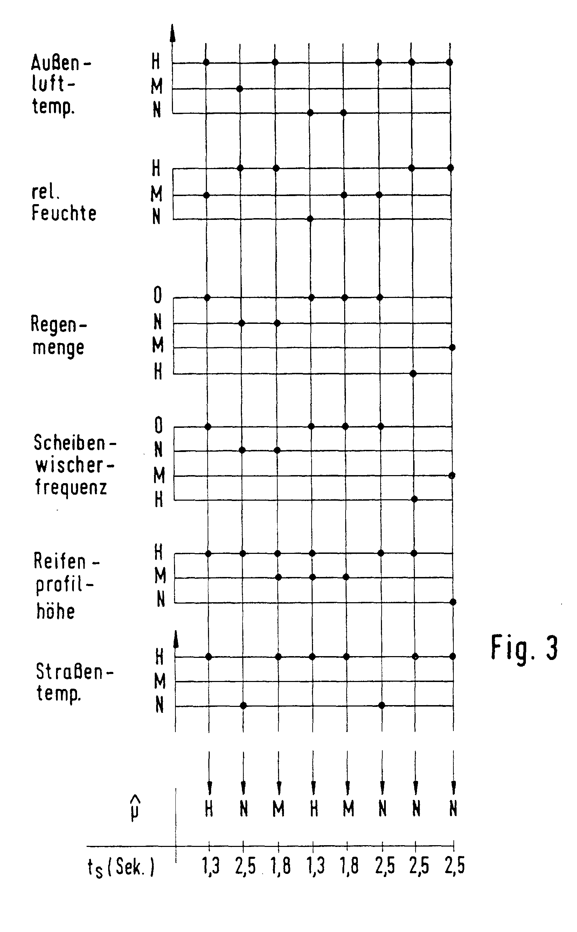

In Figur 3 ist eine Verknüpfung von in einem Fahrzeug überwiegend normalerweise vorliegenden Informationen zur Zuordnung des momentan maximalen Reibkraftbeiwerts einer von drei Klassen gemäß einer unscharfen Logik in Übereinstimmung mit einem zweiten Ausführungsbeispiel der Erfindung dargestellt. Dabei werden folgende Informationen miteinander verknüpft:

### 1. Parameter des Reifens

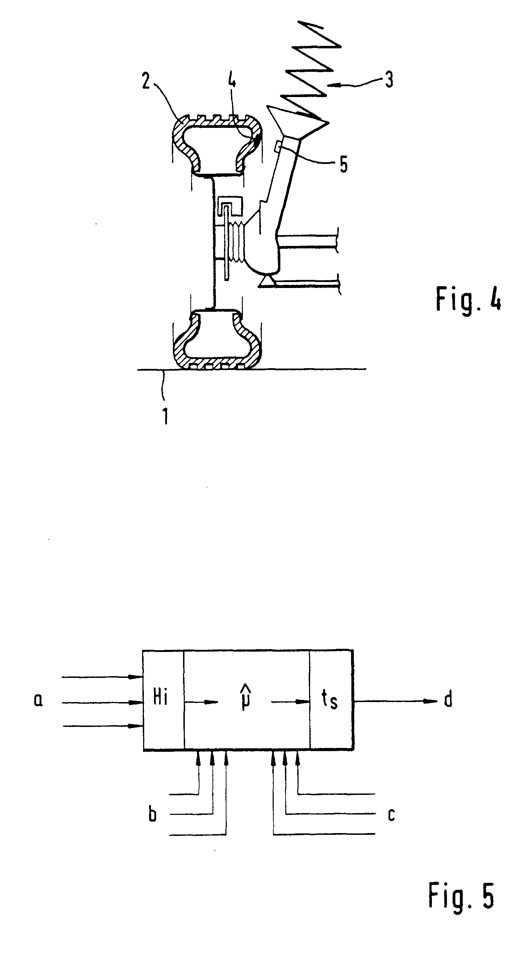

Als Reifenparameter wird das Reifenprofil, die Reifenform, -mischung, -art, -größe etc., wie sie sich insbesondere aus dem eingesetzten Reifentyp ergeben, verwendet. Der Reifentyp kann vom Fahrer entweder manuell einer Auswerteinrichtung zugeführt werden oder automatisch ausgelesen werden. So kann, wie in Figur 4 dargestellt, der Reifentyp eines Reifens 2 auf einer Fahrbahn 1 über eine magnetische Kodierung 4 am Reifen 2 unter Einsatz eines am Federbein montierten Abtastsensors 5 im Bereich der Bremse 3 ermittelt werden.

### 2. Parameter der Fahrbahn

Als Parameter der Fahrbahn wird die Straßenoberflächentemperatur in die Auswerteinrichtung eingelesen, beispielsweise über telemetrische Dateneinkopplung von in der Planung befindlichen Transpondern am Fahrbahnrand oder über mitgeführte Sensorik oder einfach nur über einen Konstantwert.

### 3. Parameter des Kontaktmediums

Den größten Einfluß auf die erfindungsgemäße Zuordnung zu einer Kenngröße für den tatsächlich vorhandenen, momentan maximalen Reibkraftbeiwert µ haben die Parameter des Kontaktmediums zwischen einem Fahrzeug und einer Fahrbahn. Es bietet sich in diesem Zusammenhang an, auf die Außenlufttemperatur, vorzugsweise gemessen über einen Außentemperatursensor der Motorsteuerung, die relative Feuchte, vorzugsweise gemessen über einen Luftfeuchtesensor der Klimaanlage, die Regenmenge, vorzugsweise gemessen über einen Regensensor der Scheibenwischersteuerung, und die Scheibenwischerfrequenz zurückzugreifen.

Jedem der Parameter wird zumindest einer von drei Werten zugeordnet, nämlich H="Hoch", M="Mittel" oder N="Niedrig" und gegebenenfalls die 0, wie im Falle einer nicht vorhandenen Regenmenge beziehungsweise eines ausgeschalteten Scheibenwischers, siehe Figur 3. Basierend auf den oben beschriebenen Parametern unter angenäherter Kenntnis der Radaufstandskraft, wie aus Fahrzeuggewicht, Lage des Fahrzeugschwerpunkts, Achslastverteilung entsprechend der vorliegenden Fahrzeugverzögerung/-beschleunigung und Fahrzeuggeschwindigkeit berechnet, kann dann eine Zuordnung des Reibkraftbeiwerts und somit der Folgezeit zu einem von drei Kennwerten stattfinden. Gemäß dem in Figur 3 gezeigten Ausführungsbeispiel wird erfindungsgemäß vorgeschlagen, daß tₛ (µ_{H}) =1,3 Sek., tₛ (µ_{M}) =1, 8 Sek. und tₛ (µ_{N}) = 2, 5 Sek.

Die erfindungsgemäße logische Verknüpfung kann in einer Auswerteinrichtung, wie sie in Figur 5 dargestellt ist, durchgeführt werden. Demgemäß können der Auswerteinrichtung Eingangsgrößen a, b und c zugeführt werden, und es werden als Ausgangsgrößen d die erfindungsgemäß zugeordneten Kennwerte für die jeweilige Folgezeit tₛ ausgegeben, beispielsweise an ein Display oder ein Fahrtregelungssystem. Als Eingangsgrößen eignen sich erfindungsgemäß insbesondere die Parameter des Reifens, der Fahrbahn und des Kontaktmediums, wie bereits zuvor ausgeführt. Es ist in diesem Zusammenhang noch darauf hinzuweisen, daß sich insbesondere der Verschleißzustand der Reifen über ein Verschleißmodell bestimmen läßt, welches über ein Geschwindigkeitshistogramm in Verbindung mit einem Querbeschleunigungshistogramm und einem ermittelten Reibkraftbeiwerthistogramm gewonnen wird, wie in Figur 5 durch die Berechnung der diversen Histogramme Hi angedeutet.

Abschließend ist noch darauf hinzuweisen, daß das bereits in Planung befindliche Transpondersystem am Fahrbahnrand in Zukunft die Möglichkeit bietet, die Parameter der Fahrbahn sowie des Kontaktmediums auch direkt in eine Auswerteinrichtung einzukoppeln, was eine Abschätzung des Reibkraftbeiwerts und somit der Folgezeit erheblich verbesseren wird und gegebenenfalls zu einer differenzierten Klasseneinteilung führen kann.

### Bezugszeichenliste

- µ: Reibkraftbeiwert
- µ_{I}: Reibkraftbeiwert bei einer Wasserfilmhöhe von ungefähr 0, 3mm
- µ_{II}: Reibkraftbeiwert bei einer Wasserfilmhöhe von ungefähr 3,0mm
- µ_{g}: Reibkraftbeiwert bei einem hundertprozentigen Schlupf, bemessen bei einem in Längsrichtung rollenden Einzelfahrzeug mit P IARC-Reifen auf nasser, aber sauberer Fahrbahn.
- µₙ: in Notsituation abverlangter Reibkraftbeiwert
- µₛ: in üblichen Abstandsregelungen abverlangter Haftbeiwert
- S: Schlupf
- tₛ: Folgezeit
- v_{F}: Fahrzeuggeschwindigkeit
- O: Null
- N: Niedrig
- M: Mittel
- H: Hoch
- Hi: Histogramm
- a, b, c: Eingangsgröße
- d: Ausgangsgröße
- 1: Straßenoberfläche
- 2: Reifen
- 3: Bremse
- 4: Kodierung Abtastsensor

## Patentansprüche

1. Verfahren zum Ermitteln einer Kenngröße für einen momentan maximalen Reibkraftbeiwert zwischen Reifen eines Fahrzeugs und einer Fahrbahn, der durch das Verhältnis aus Reibkraft zur Radaufstandskraft berechnet wird, und zur Bestimmung einer -mit einem Sicherheitsabstand gleichbedeutenden- Folgezeit des Fahrzeugs relativ zu einem weiteren, jeweils in Fahrtrichtung unmittelbar vorderen Fahrzeug zwecks Abstandsregelung, bei dem unter logischer Verknüpfung von Datenausgabewerten von einem im Fahrzeug vorhandenen Außentemperatursensor, Luftfeuchtesensor, Regensensor, Straßenoberflächetemperatursensor oder Abtastsensor zum Einlesen eines Reifentyps, die Kenngröße des Reibkraftbeiwerts einer von zumindest zwei Klassen zugeordnet und dann der Abstandsregelung des Fahrzeugs zugeführt wird und bei dem die Kenngröße des Reibkraftbeiwerts im Falle von Nässe einer ersten Klasse und ansonsten einer zweiten Klasse, zugeordnet wird, **dadurch gekennzeichnet daß** die Folgezeit im Fall von Nässe in einem Bereich von 1,5 Sekunden bis 3,5 Sekunden und im Fall von nicht Nässe in einem Bereich von 0,9 Sekunden bis 1,8 Sekunden variiert und stetig mit einer Zunahme der Fahrtgeschwindigkeit in einem Bereich von 30 bis 150 km/h steigt.

2. Verfahren nach Anspruch 1,
**dadurch gekennzeichnet, daß** die geschwindigkeitsabhängige Kenngröße des Reibkraftbeiwerts jeder der beiden Klassen über die Häufigkeitsverteilung der Reibkraftbeiwerte über eine große Menge an Fahrbahnen, wie über die Gesamtheit aller deutschen Straßen, bei einem hundertprozentigen Schlupf gemessen, insbesondere für ein in Längsrichtung rollendes Einzelfahrzeug mit Standardreifen auf nasser, aber sauberer Fahrbahn, vorzugsweise über die 95%ige Summenhäufigkeitslinie besagter Häufigkeitsverteilung, bestimmt wird.

3. Verfahren zum Ermitteln einer Kenngröße für einen momentan maximalen Reibkraftbeiwert zwischen Reifen eines Fahrzeugs und einer Fahrbahn, der durch das Verhältnis aus Reibkraft zur Radaufstandskraft berechnet wird, und zur Bestimmung einer -mit einem Sicherheitsabstand gleichbedeutenden- Folgezeit des Fahrzeugs relativ zu einem weiteren, jeweils in Fahrtrichtung unmittelbar vorderen Fahrzeug zwecks Abstandsregelung, bei dem unter logischer Verknüpfung von Datenausgabewerten von in dem Fahrzeug vorhandenem Außentemperatursensor, Luftfeuchtesensor, Regensensor, Straßenoberflächetemperatursensor und/oder Abtastsensor zum Einlesen eines Reifentyps, die Kenngröße des Reibkraftbeiwerts über eine unscharfe Logik in Abhängigkeit von Parametern des Reifens des Fahrzeugs, der Fahrbahn und/oder des Kontaktmediums zwischen dem Reifen und der Fahrbahn einer von drei Klassen und somit einem von drei, geschwindigkeitsunabhängigen Kennwerten zugeordnet wird, bei dem durch einen ersten Kennwert niedrige Reibkräfte beziehungsweise Reibkraftbeiwerte, einen zweiten Kennwert mittlere Reibkräfte beziehungsweise Reibkraftbeiwerte und einen dritten Kennwert hohe Reibkräfte beziehungsweise Reibkraftbeiwerte repräsentiert werden, **dadurch gekennzeichnet daß** bei dem bei dem ersten Kennwert eine erste Folgezeit, wie 2,5 Sekunden, dem zweiten Kennwert eine zweite Folgezeit, wie 1,8 Sekunden, und dem dritten Kennwert eine dritte Folgezeit, wie 1,3 Sekunden, geschwindigkeitsunabhängig zugeordnet wird und wobei zur Klassenzuordnung zumindest eine Abschätzung der Parameter des Kontaktmediums durchgeführt, die Radaufstandskraft näherungsweise berechnet wird und als Parameter der Reifen des Fahrzeugs Reifentyp, Profilform, Latsch, Gummimischung und/oder Verschleißzustand bei der Klassenzuordnung für den momentan maximalen Reibkraftbeiwert berücksichtigt wird beziehungsweise werden.

4. Verfahren nach Anspruch 3,
**dadurch gekennzeichnet, daß** die Außentemperatur, die relative Luftfeuchte und/oder die Scheibenwischereinstellung, wie Ein/Aus und/oder Frequenz, erfaßt und als die Parameter des Kontaktmediums logisch, insbesondere unter Annahme einer durchschnittlichen Fahrbahn sowie durchschnittlicher Reifen, zur Bestimmung des Kennwerts der Reibkraft verwendet wird beziehungsweise werden.

5. Verfahren nach Anspruch 3 oder 4, **dadurch gekennzeichnet, daß** der Datenausgabewert eines Regensensors als Parameter des Kontaktmediums bei der Bestimmung des Kennwerts der Reibkraft berücksichtigt wird.

6. Verfahren einem der Ansprüche 3 bis 5,
**dadurch gekennzeichnet, daß** der Reifentyp, vorzugsweise über eine Kodierung, vom Fahrer eingegeben oder automatisch eingelesen wird.

7. Verfahren einem der Ansprüche 3 bis 6,
**dadurch gekennzeichnet, daß** der Verschleißzustand jedes Reifen des Fahrzeugs über ein Verschleißmodell, vorzugsweise unter Berücksichtigung eines Geschwindigkeitshistogramms, wie über die Raddrehzahl bestimmt, in Verbindung mit einem Querbeschleunigungshistogramm, wie über Querbeschleunigungssensoren erfaßt, und in Verbindung mit einem Reibkraftbeiwerthistogramm, ermittelt wird.

8. Verfahren nach einem der Ansprüche 3 bis 7,
**dadurch gekennzeichnet, daß** der Verschleißzustand unter Berücksichtigung eines Histogramms der Raddrücke bestimmt wird.

9. Verfahren nach einem der Ansprüche 3 bis 8,
**dadurch gekennzeichnet, daß** als Parameter der Fahrbahn Baustoff, Oberflächenstruktur und/oder Oberflächentemperatur derselben bei der Klassenzuordnung für den momentan maximalen Reibkraftbeiwert berücksichtigt wird beziehungsweise werden.

10. Verfahren nach einem der Ansprüche 3 bis 9,
**dadurch gekennzeichnet, daß** als Parameter des Kontaktmediums Höhe eines Wasserfilms, Eis und/oder festen Schnees auf einer Fahrbahn berücksichtigt wird beziehungsweise werden.

11. Verfahren nach einem der Ansprüche 3 bis 10,
**dadurch gekennzeichnet, daß** die Parameter der Fahrbahn und/oder des Kontaktmediums über ein Transpondersystem am Fahrbahnrand in eine Auswerteinrichtung eingekoppelt werden.

12. Vorrichtung zum Ermitteln einer Kenngröße für einen momentan maximalen Reibkraftbeiwert zwischen Reifen eines Fahrzeugs und einer Fahrbahn, der durch das Verhältnis aus Reibkraft zur Radaufstandskraft berechnet wird, und zur Bestimmung einer -mit einem Sicherheitsabstand gleichbedeutenden- Folgezeit des Fahrzeugs relativ zu einem weiteren, jeweils in Fahrtrichtung unmittelbar vorderen Fahrzeug zwecks Abstandsregelung, gemäß einem Verfahren nach einem der vorangehenden Ansprüche,
**gekennzeichnet durch** eine Auswerteinrichtung, die mit einem Außentemperatursensor, der vorzugsweise mit einer Motorsteuerung des Fahrzeugs verbunden ist, mit einem Luftfeuchtesensor, der vorzugsweise mit einer Klimaanlage des Fahrzeugs verbunden ist, und/oder einer Scheibenwischanlage, insbesondere deren Betätigungstaste, Stufenschalter und/oder Regensensor, in ihrem Eingangsbereich und mit einem Anzeigegerät, wie einem Display eines Navigationssystems des Fahrzeugs, und/oder einer Abstandsregelung des Fahrzeugs in ihrem Ausgangsbereich verbunden ist.

13. Vorrichtung nach Anspruch 12,
**dadurch gekennzeichnet, daß** die Auswerteinrichtung mit einem Straßenoberflächentemperatursensor, wie einer IR-Wärmekamera, verbunden ist.

14. Vorrichtung nach Anspruch 12 oder 13,
**dadurch gekennzeichnet, daß** die Auswerteinrichtung über telemetrische Dateneinkopplung von Transpondern am Fahrbahnrand Parameter einer Fahrbahn und/oder eines Kontaktmediums zwischen der Fahrbahn und den Reifen des Fahrzeugs empfängt.

15. Vorrichtung nach einem der Ansprüche 12 bis 14,
**dadurch gekennzeichnet, daß** in der Auswerteinrichtung Geschwindigkeitsdaten zur Bestimmung eines Geschwindigkeitshistogramms, Querbeschleunigungsdaten zur Bestimmung eines Querbeschleunigungshistogramms und/oder Reibkraftbeiwerte zur Bestimmung eines Reibkraftbeiwerthistogramms ablegbar sind.

16. Vorrichtung nach einem der Ansprüche 12 bis 15,
**dadurch gekennzeichnet, daß** die Auswerteinrichtung mit einer elektrisch-hydraulischen Bremsanlage zum Erhalt von Raddrücken verbunden ist, und in der Auswerteinrichtung die Raddrücken zur Bestimmung eines Raddruckhistogramms ablegbar sind.

17. Vorrichtung nach einem der Ansprüche 12 bis 16,
**dadurch gekennzeichnet, daß** die Auswerteinrichtung mit einem Bedienfeld zum Eingeben von Parametern per Hand verbunden ist.

18. Vorrichtung nach einem der Ansprüche 12 bis 17,
**dadurch gekennzeichnet, daß** die Auswerteinrichtung mit einer Einrichtung zum Einlesen eines Reifentyps, wie einem Abtastsensor, vorzugsweise montiert an einem Federbein, zur Erfassung eines Kodierimpulses, vorzugsweise mittels magnetischer Kodierung, verbunden ist.

## Claims

1. Method of determining a characteristic quantity for an instantaneously maximum coefficient of friction between the tires of a vehicle and a roadway, which is calculated from the ratio between the frictional force and the wheel contact force, and for defining a following time, identical in meaning with a safety distance, of the vehicle in relation to another vehicle which is directly in front thereof in the direction of travel, for collision avoidance purposes, wherein by logically linking data output values of an outside temperature sensor, air humidity sensor, rain sensor, road surface temperature sensor or scanning sensor provided in the vehicle for reading in the type of a tire, the characteristic quantity of the coefficient of friction is assigned to one of at least two classes and is then sent to the collision avoidance system of the vehicle, and wherein the characteristic quantity of the coefficient of friction is assigned to a first class in the event of wet road conditions and otherwise to a second class,
**characterized in that** the following time in the event of humidity varies in a range from 1.5 seconds to 3.5 seconds and in the event of no humidity in a range from 0.9 seconds to 1.8 seconds and rises constantly with an increase in the driving speed in a range between 30 and 150 km/h.

2. Method as claimed in claim 1,
**characterized in that** the speed-responsive characteristic quantity of the coefficient of friction of each of the two classes is determined, by way of the frequency distribution function of the coefficients of friction over a large quantity of roadways, such as over all German roads, measured at a 100 % slip value, especially for a single vehicle with standard tires travelling in a longitudinal direction on a wet but clean roadway, preferably, over the 95 % sum frequency curve of said frequency distribution function.

3. Method of determining a characteristic quantity for an instantaneously maximum coefficient of friction between the tires of a vehicle and a roadway, which is calculated from the ratio between the frictional force and the wheel contact force, and for defining a following time, identical in meaning with a safety distance, of the vehicle in relation to another vehicle which is directly in front thereof in the direction of travel, for collision avoidance purposes, wherein by logically linking data output values of an outside temperature sensor, air humidity sensor, rain sensor, road surface temperature sensor or scanning sensor provided in the vehicle for reading in the type of a tire, the characteristic quantity of the coefficient of friction, by way of a fuzzy logic, is assigned to one of three classes and, thus, to one of three characteristic quantities which are preferably irrespective of speed in response to parameters of the tyre of the vehicle, the roadway and/or the contact medium between the tyre and the roadway, wherein low frictional forces or coefficients of friction, respectively, are represented by a first characteristic quantity, medium frictional forces or coefficients of friction are represented by a second characteristic quantity, and high frictional forces or coefficients of friction are represented by a third characteristic quantity,
**characterized in that** a first following time of e.g. 2.5 seconds is assigned to the first characteristic quantity, a second following time of e.g. 1.8 seconds is assigned to the second characteristic quantity, and a third following time of e.g. 1.3 seconds is assigned to the third characteristic quantity, the said assignments being made irrespective of speed, and wherein for the classification at least an assessment of the parameters of the contact medium is executed, the wheel contact force is calculated in approximation, and the type of tire, tread design, tire print, rubber compound, and/or the condition of wear is/are taken into consideration as parameters of the tires of the vehicle in the classification for the instantaneously maximum coefficient of friction.

4. Method as claimed in claim 3,
**characterized in that** the outside temperature, the relative air humidity, and/or the wiper adjustment, such as on/off and/or frequency, is/are sensed and used logically as the parameters of the contact medium, especially with the assumption of an average roadway and average tires, to determine the characteristic quantity of the frictional force.

5. Method as claimed in claim 3 or claim 4,
**characterized in that** the data output value of a rain sensor is taken into consideration as a parameter of the contact medium when determining the characteristic quantity of the frictional force.

6. Method as claimed in any one of claims 3 to 5,
**characterized in that** the type of tire is input by the driver or read in automatically, preferably, by way of a coding.

7. Method as claimed in any one of claims 3 to 6,
**characterized in that** the condition of wear of each tire of the vehicle is detected by way of a wear model, preferably in consideration of a speed histogram, as defined by the wheel rotational speed, in conjunction with a transverse acceleration histogram, as detected by transverse acceleration sensors, and in conjunction with a coefficient of friction histogram.

8. Method as claimed in any one of claims 3 to 7,
**characterized in that** the condition of wear is determined in consideration of a histogram of the wheel pressures.

9. Method as claimed in any one of claims 3 to 8,
**characterized in that** the material, the structure of the surface, and/or the surface temperature is/are taken into consideration as parameters of the roadway in the classification for the instantaneously maximum coefficient of friction.

10. Method as claimed in any one of claims 3 to 9,
**characterized in that** the height of a water film, ice, and/or solid snow on a roadway is/are taken into consideration as parameters of the contact medium.

11. Method as claimed in any one of claims 3 to 10,
**characterized in that** the parameters of the roadway and/or of the contact medium are input into an evaluating device by way of a transponder system at the border of a roadway.

12. Device for determining a characteristic quantity for an instantaneously maximum coefficient of friction between the tires of a vehicle and a roadway, which is calculated from the ratio between the frictional force and the wheel contact force, and for defining a following time, identical in meaning with a safety distance, of the vehicle in relation to another vehicle which is directly in front thereof in the direction of travel, for collision avoidance purposes, according to a method as claimed in any one of the preceding claims,
**characterized by** an evaluating device which is connected to an outside temperature sensor preferably connected to the engine control of the vehicle, to an air humidity sensor which is preferably connected to an air conditioning system of the vehicle, and/or to a wiper system, especially to its actuating button, stepped switch and/or rain sensor, in its inlet range, and to an indicator device, such as a display of a navigation system of the vehicle, and/or a collision avoidance system of the vehicle in its outlet range.

13. Device as claimed in claim 12,
**characterized in that** the evaluating device is connected to a road surface temperature sensor, such as an infrared camera.

14. Device as claimed in claim 12 or 13,
**characterized in that** the evaluating device receives parameters of a roadway and/or a contact medium between the roadway and the tires of the vehicle by means of telemetric data input from transponders at the border of the roadway.

15. Device as claimed in any one of claims 12 to 14,
**characterized in that** speed data to determine a speed histogram, transverse acceleration data to determine a transverse acceleration histogram, and/or coefficients of friction to determine a wheel pressure histogram can be stored in the evaluating device.

16. Device as claimed in any one of claims 12 to 15,
**characterized in that** the evaluating device is connected to an electric-hydraulic brake system to obtain wheel pressures, and the wheel pressures can be stored in the evaluating device for determining a wheel pressure histogram.

17. Device as claimed in any one of claims 12 to 16,
**characterized in that** the evaluating device is connected to a control panel for the manual input of parameters.

18. Device as claimed in any one of claims 12 to 17,
**characterized in that** the evaluating device is connected to a device for reading in the type of tires, such as a scanning sensor, preferably mounted on a spring strut, for detecting a coding pulse, preferably by means of a magnetic coding.

## Revendications

1. Procédé de détermination d'une grandeur caractéristique d'un coefficient de friction maximal momentané entre les pneus d'un véhicule et une chaussée, lequel est calculé par le rapport entre la force de friction et la force d'appui des roues, et pour déterminer un temps de poursuite - équivalant à une distance de sécurité - du véhicule par rapport à un autre véhicule immédiatement précédent dans le sens de marche, en vue de la régulation de la distance, dans lequel procédé, par relation logique de valeurs de sortie de données d'un capteur de température extérieure prévue dans le véhicule, d'un capteur d'humidité de l'air, d'un capteur de pluie, d'un capteur de température de la surface de la chaussée ou d'un capteur à balayage pour l'enregistrement d'un type de pneu, la grandeur caractéristique du coefficient de friction est affectée à l'une d'au moins deux classes et est envoyée ensuite au dispositif de régulation de la distance du véhicule, et dans lequel la grandeur caractéristique du coefficient de friction est affectée en cas d'humidité à une première classe et sinon à une deuxième classe, **caractérisé en ce que** le temps de poursuite en cas d'humidité varie entre 1,5 seconde et 3,5 secondes et en cas de non humidité entre 0,9 seconde et 1,8 seconde, et augmente constamment lorsque la vitesse de marche augmente entre 30 et 150 km/h.

2. Procédé selon la revendication 1, **caractérisé en ce que** la grandeur caractéristique, dépendant de la vitesse, du coefficient de friction de chacune des deux classes sur la distribution de fréquence des coefficients de friction, sur une grande quantité de chaussées, par exemple sur la totalité des routes allemandes, pour un glissement à cent pour cent, en particulier pour un véhicule simple roulant dans la direction longitudinale avec des pneus standard sur chaussée humide, mais propre, de préférence déterminée sur la courbe de fréquence totale à 95 % de ladite distribution de fréquence.

3. Procédé de détermination d'une grandeur caractéristique d'un coefficient de friction maximal momentané entre les pneus d'un véhicule et une chaussée, lequel est calculé par le rapport entre la force de friction et la force d'appui des roues, et pour déterminer un temps de poursuite - équivalant à une distance de sécurité - du véhicule par rapport à un autre véhicule immédiatement précédent dans le sens de marche, en vue de la régulation de la distance, dans lequel procédé, par relation logique de valeurs de sortie de données d'un capteur de température extérieure prévu dans le véhicule, d'un capteur d'humidité de l'air, d'un capteur de pluie, d'un capteur de température de la surface de la chaussée ou d'un capteur à balayage pour l'enregistrement d'un type de pneu, la grandeur caractéristique du coefficient de friction est affectée à l'une de trois classes et donc à l'une de trois valeurs caractéristiques dépendant de la vitesse, par une logique floue en fonction de paramètres du pneu du véhicule, de la chaussée, et/ou du milieu de contact entre le pneu et la chaussée, dans lequel procédé par une première valeur caractéristique sont représentés des forces de friction ou coefficients de friction faibles, par une deuxième valeur caractéristique des forces de friction ou coefficients de friction moyens et par une troisième valeur caractéristique, des forces de friction ou coefficients de friction élevés, **caractérisé en ce qu'**à la première valeur caractéristique est affecté, indépendamment de la vitesse, un premier temps de poursuite, par exemple 2,5 secondes, à la deuxième valeur caractéristique un deuxième temps de poursuite, par exemple 1,8 seconde, et à la troisième valeur caractéristique un troisième temps de poursuite, par exemple 1,3 seconde, et dans lequel pour la classification on procède au moins à une estimation des paramètres du milieu de contact, on calcule approximativement la force d'appui des roues et on tient compte comme paramètres des pneus du véhicule du type de pneu, de la forme du profil, de l'aplatissement, du mélange de caoutchouc, et/ou de l'état d'usure pour la classification du coefficient de friction maximal momentané.

4. Procédé selon la revendication 3, **caractérisé en ce que** la température extérieure, l'humidité relative de l'air et/ou le réglage de l'essuie-glace, tel que marche/arrêt et/ou fréquence/sont détectés et utilisés de manière logique comme paramètres du milieu de contact, en particulier en supposant une chaussée moyenne ainsi que des pneus moyens, pour déterminer la valeur caractéristique de la force de friction.

5. Procédé selon la revendication 3 ou 4, **caractérisé en ce que** la valeur de sortie de données d'un capteur de pluie est prise en compte comme paramètres du milieu de contact dans la détermination de la valeur caractéristique de la force de friction.

6. Procédé selon l'une des revendications 3 à 5, **caractérisé en ce que** le type de pneu est entré par le conducteur ou enregistré automatiquement, de préférence par un codage.

7. Procédé selon l'une des revendications 3 à 6, **caractérisé en ce que** l'état d'usure de chaque pneu du véhicule est déterminé par un modèle d'usure, de préférence en tenant compte d'un histogramme de la vitesse, par exemple par la vitesse de rotation des roues, en combinaison avec un histogramme de l'accélération transversale, par exemple par des capteurs d'accélération transversale, et est déterminé en combinaison avec un histogramme du coefficient de friction.

8. Procédé selon l'une des revendications 3 à 7, **caractérisé en ce que** l'état d'usure est déterminé en tenant compte d'un histogramme de la pression des pneus.

9. Procédé selon l'une des revendications 3 à 8, **caractérisé en ce que** pour la classification du coefficient de friction maximal momentané, on tient compte comme paramètres de la chaussée du matériau de construction, de la structure superficielle et/ou de la température superficielle de celle-ci.

10. Procédé selon l'une des revendications 3 à 9, **caractérisé en ce qu'**on tient compte comme paramètre du milieu de contact de la hauteur d'une pellicule d'eau, de la glace et/ou de la neige solide sur une chaussée.

11. Procédé selon l'une des revendications 3 à 10, **caractérisé en ce que** les paramètres de la chaussée et/ou du milieu de contact sont introduits dans un dispositif d'exploitation par un système de transpondeurs sur le bord de la chaussée.

12. Dispositif de détermination d'une grandeur caractéristique d'un coefficient de friction maximal momentané entre les pneus d'un véhicule et une chaussée, lequel est calculé par le rapport entre la force de friction et la force d'appui des roues, et pour déterminer un temps de poursuite - équivalant à une distance de sécurité - du véhicule par rapport à un autre véhicule immédiatement précédent dans le sens de marche, en vue de la régulation de la distance, suivant un procédé selon l'une des revendications précédentes, **caractérisé par** un dispositif d'exploitation qui est relié à un capteur de température extérieure, qui est relié de préférence à une commande du moteur du véhicule, un capteur d'humidité de l'air, qui est relié de préférence à un système de climatisation du véhicule, et/ou à un système d'essuie-glace, en particulier à sa touche d'actionnement, commutateur à crans et/ou capteur de pluie, dans sa zone d'entrée et à un appareil d'affichage, tel qu'un écran d'un système de navigation du véhicule, et/ou à un dispositif de régulation de la distance du véhicule dans sa zone de sortie.

13. Dispositif selon la revendication 12, **caractérisé en ce que** le dispositif d'exploitation est relié à un capteur de température de la surface de la chaussée, par exemple à une caméra thermique à infrarouge.

14. Dispositif selon la revendication 12 ou 13, **caractérisé en ce que** le dispositif d'exploitation reçoit, par couplage télémétrique de données de transpondeurs sur le bord de la chaussée, des paramètres d'une chaussée et/ou d'un milieu de contact entre la chaussée et les pneus du véhicule.

15. Dispositif selon l'une des revendications 12 à 14, **caractérisé en ce que** dans le dispositif d'exploitation peuvent être enregistrées des données de vitesse pour déterminer un histogramme de la vitesse, des données d'accélération transversale pour déterminer un histogramme de l'accélération transversale et/ou des coefficients de friction pour déterminer un histogramme du coefficient de friction.

16. Dispositif selon l'une des revendications 12 à 15, **caractérisé en ce que** le dispositif d'exploitation est relié à un système de freinage électro-hydraulique pour obtenir les pressions des pneus, et dans le dispositif d'exploitation, les pressions des pneus peuvent être enregistrées pour déterminer un histogramme de la pression des pneus.

17. Dispositif selon l'une des revendications 12 à 16, **caractérisé en ce que** le dispositif d'exploitation est relié à une zone de commande pour la saisie manuelle de paramètres.

18. Dispositif selon l'une des revendications 12 à 17, **caractérisé en ce que** le dispositif d'exploitation est relié à un dispositif d'enregistrement d'un type de pneus, par exemple à un capteur à balayage, monté de préférence sur une jambe de force à ressort, pour détecter une impulsion de codage, de préférence par codage magnétique.
